# NEUE EUROPÄISCHE PATENTSCHRIFT

(11) **EP 1 348 613 B2**
(45) Veröffentlichungstag und Bekanntmachung des Hinweises auf die Entscheidung über den Einspruch: **21.09.2011**
(45) Hinweis auf die Patenterteilung: 25.05.2005
(21) Anmeldenummer: 03006347.3
(22) Anmeldetag: 20.03.2003
(51) Int. Cl.: B62D 25/14, B62D 29/00

(54) **Querträger zwischen zwei seitlichen Randbereichen einer Fahrzeugstruktur**
Cross beam connecting the two side regions of a vehicle structure
Traverse structurelle entre les deux parties latérales d'un véhicule automobile

(30) Priorität: 30.03.2002 DE 10214474
(43) Veröffentlichungstag der Anmeldung: 01.10.2003
(73) Patentinhaber: Bayerische Motoren Werke Aktiengesellschaft, 80809 München (DE)
(72) Erfinder: Scheer, Jürgen, 81377 München (DE); Wiedemann, Ulrich, 85604 Zorneding (DE); Streinz, Wolfgang, 84034 Landshut (DE)

(56) Entgegenhaltungen:
- DE-A- 4 232 846
- DE-A- 19 715 069
- DE-A1- 3 101 227
- DE-A1- 4 117 594
- DE-A1- 10 029 813
- DE-A1- 10 057 181
- DE-A1- 19 711 236
- DE-A1- 19 845 146
- DE-U- 29 916 467
- DE-U1- 29 619 133
- BEITZ, WOLFGANG; KÜTTNER, KARL-HEINZ: 'Taschenbuch für den Maschinenbau / Dubbel.', Bd. 17.AUFL., 1990, SPRINGER-VERLAG., BERLIN, ISBN 3-540-52381-2

## Beschreibung

Die Erfindung betrifft einen Querträger zwischen zwei seitlichen Randbereichen einer Fahrzeugstruktur gemäß des Oberbegriffs des Patentanspruchs 1, welcher in Dokument offenbart ist.

Derartige Querträger erstrecken sich im Rahmen einer Kraftfahrzeugstruktur unter anderem zwischen den vorderen bzw. A-Säulen und erfüllen unterschiedliche Funktionen. Sie dienen zum einen im weitesten Sinne als Cockpitträger bzw. als Halteeinrichtung für zahlreiche Anbauteile, wie zum Beispiel die Befestigung von Elementen der Lenksäule, Teile von Airbagsystemen, Komponenten von Lüftungsund / oder Klimatisierungseinrichtungen, ein Handschuhfach, etc. Darüber hinaus haben solche Querträger auch eine Versteifungsfunktion für die Fahrzeugstruktur.

Traditionell werden die Querträger häufig als Stahlrohrkonstruktion ausgebildet, die mit zahlreichen, jeweils individuell auf die anzubindenden Anbauelemente ausgerichteten Halteelementen verschweißt ist. Eine solche Stahlkonstruktion kann in Abhängigkeit von der jeweiligen konstruktiven und / oder werkstofflichen Ausbildung ein bedeutendes Gewicht aufweisen. Die aus Gründen des Umweltschutzes geforderte Treibstoffeinsparung setzt jedoch eine Gewichtsreduzierung der Fahrzeuge voraus.

Aus der DE 197 15 069 A1ist ein Querträger zwischen zwei seitlichen Randbereichen einer Fahrzeugstruktur mit wenigstens einem Halteelement zur Anbindung von Fahrzeugfunktionselementen bekannt. Der Querträger ist in wenigstens zwei, miteinander lösbar in Verbindung stehende Teilabschnitte unterteilt. Die Teilabschnitte können aus einem Leichtbauwerkstoff, wie zum Beispiel aus einem Leichtmetall, einer Leichtmetalllegierung oder einem faserverstärkten Kunststoff, bestehen. Unter Berücksichtigung der durch Legierungsbildung erzielbaren Festigkeitsverhältnisse kann sich bei gleicher Beanspruchbarkeit gegenüber dem Werkstoff Stahl eine Gewichtsreduzierung ergeben. Innerhalb der Gruppe der Leichtmetalle kommen zahlreiche werkstoffliche Varianten in Betracht, wobei als Basiswerkstoff vorzugsweise Aluminium oder Magnesium zum Einsatz kommen.

Aufgabe der Erfindung ist es, den bekannten Querträger weiterzubilden, sodass die Anzahl der Einzelteile des eigentlichen Querträgers abnimmt.

Diese Aufgabe wird durch die. Merkmale des Patentanspruchs 1 gelöst.

Kerngedanke der Erfindung ist es, dass der Querträger axial aus einem ersten Abschnitt aus Stahl und einem zweiten Abschnitt aus einem Leichtmetall besteht, die miteinander verschweißt sind. Die hohe Steifigkeit von Stahl ist bei den meisten Querträgern, insbesondere wenn sie eine Tunnelabstützung aufweisen, nur auf der Fahrerseite notwendig. Beim erfindungsgemäßen Querträger wird diese Erkenntnis dazu genutzt, einen leichten Querträger zu bilden, indem der Abschnitt des Querträgers auf der Beifahrerseite aus einem weniger steifen Leichtmetall besteht. Die Schweißverbindung der beiden Abschnitte garantiert eine sichere Verbindung, die den gegebenen Beanspruchungen standhält. Gegenüber der aus dem Stand der Technik bekannten lösbaren Steckverbindung mehrerer Teilabschnitte eines Querträgers müssen bei dem erfindungsgemäßen Querträger nicht mehrere Einzelteile bei der Endmontage des Fahrzeugs gehandhabt werden. Der bereits zusammengeschweißte Querträger kann ferner bereits vor der Endmontage qualitativ geprüft werden. Es entstehen keine Zusammenbautoleranzen wie bei der bekannten Steckverbindung mehrerer Teilabschnitte. Da beim Reibschweißen Stoß an Stoß geschweißt wird, ist - im Gegensatz zu einer Steckverbindung - außerdem keine Überlappung, die mit einer Gewichtsmehrung einhergeht, erforderlich.

Das Leichtmetall ist vorteilhafterweise Aluminium oder Magnesium bzw. eine Aluminium- oder Magnesiumlegierung. Diese Materialen weisen ein relativ geringes spezifisches Gewicht und eine vergleichsweise hohe Steifigkeit auf, sodass sie zur Gewichtseinsparung prädestiniert sind.

Aus dem Stand der Technik sind zur Verbindung von Stahl mit einem Leichtmetall bereits mannigfache Schweißverfahren, wie beispielsweise Explosionsschweißen oder Reibschweißen bekannt. Als besonders geeignet hat sich die Reibschweißtechnik zum Verbinden der beiden Abschnitte des Querträgers herausgestellt. Beim Reibschweißen der beiden Abschnitte des Querträgers lassen sich die Schweißparameter exakt einstellen und kontrollieren, sodass die Prozessfähigkeit dieses Schweißverfahrens besonders hoch ist.

Der Querträger weist idealerweise einen rohrförmigen Querschnitt auf. Als rohrförmig gilt hier jede Querschnittsform, die einen Hohlraum ummantelt. Die Form des Hohlraums oder die äußere Form des Querträgers sind dabei unerheblich. Ein Querträger mit einem rohrförmigen Querschnitt weist bezogen auf das Gewicht hohe axiale Flächenmomente und Widerstandsmomente auf. Geeignet sind aber auch einseitig offene C- oder U-förmige Querschnitte, in die Luftkanäle und / oder elektrische Kabel integrierbar sind.

In einer weiteren günstigen Ausgestaltung nicht zur Erfindung gehörend ist zwischen den beiden Abschnitten eine Stahlplatte angeordnet, die jeweils mit den Abschnitten verschweißt ist. Dadurch können die beiden Abschnitte voneinander unabhängig unterschiedliche Querschnitte und / oder Außendurchmesser aufweisen. So kann beispielsweise auf der Beifahrerseite der Abschnitt einen kleineren Außendurchmesser aufweisen, als der Abschnitt auf der Fahrerseite. Dies kann auch durch eine weitere Ausgestaltung erreicht werden, bei der das Stahlrohr zur Schweißstelle hin durch einen Matrizeneinzug oder durch Rundkneten verjüngt wird.

Der erfindungsgemäße Querträger ermöglicht den Einsatz unterschiedlicher Werkstoffe. Dadurch ist eine Einsparung von unnötiger Masse von ca. 1,0 bis 1,5 kg möglich. Bisher war nur bekannt, den Querträger aus mehreren Abschnitten aus dem gleichen Werkstoff zusammen zu schweißen. Es war bisher keine Mischbauweise möglich. Alternativ war bekannt, einzelne Abschnitte eines Querträgers auf andere Weise als durch eine Verschweißung miteinander zu verbinden. Dazu können sich die zu verbindenden Abschnitte zum Beispiel überschneiden. Die benötigte Verbindung ist dabei allerdings nur aufwändig herstellbar und damit mit großen Toleranzen behaftet. Ferner sind diese bekannten Verbindungen funktional ungünstig, insbesondere bezüglich der Steifigkeit.

In der Zeichnung sind zwei Ausführungsbeispiele dargestellt, die im folgenden näher beschrieben werden. Die Figuren zeigen in schematischer Darstellungsweise:
- **Fig.** 1: eine perspektivische Ansicht eines erfindungsgemäßen Querträgers,
- **Fig.** 2: einen Längsschnitt durch den Querträger aus **Fig.** 1 im mittleren Bereich und
- **Fig.** 3: einen Längsschnitt durch eine alternative Ausführung eines Querträgers, der nicht zur Erfindung gehört.

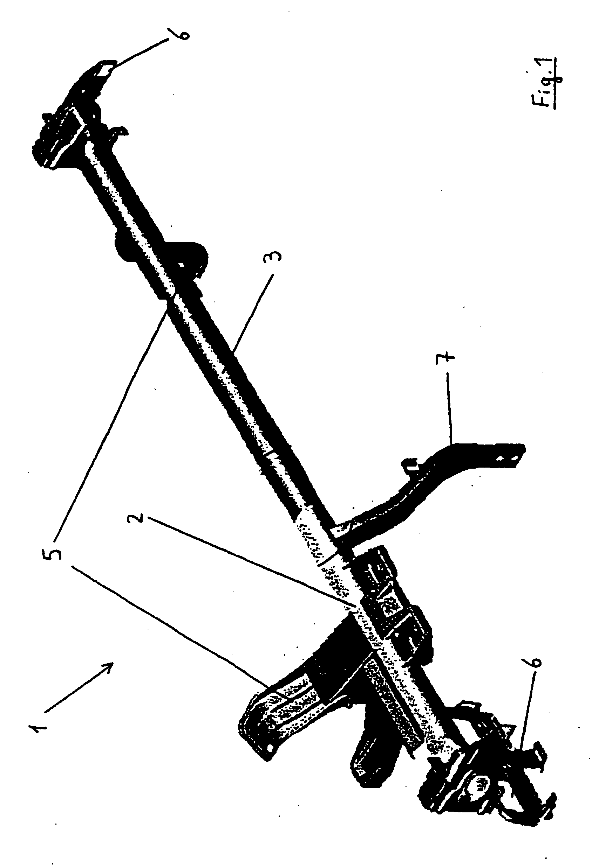

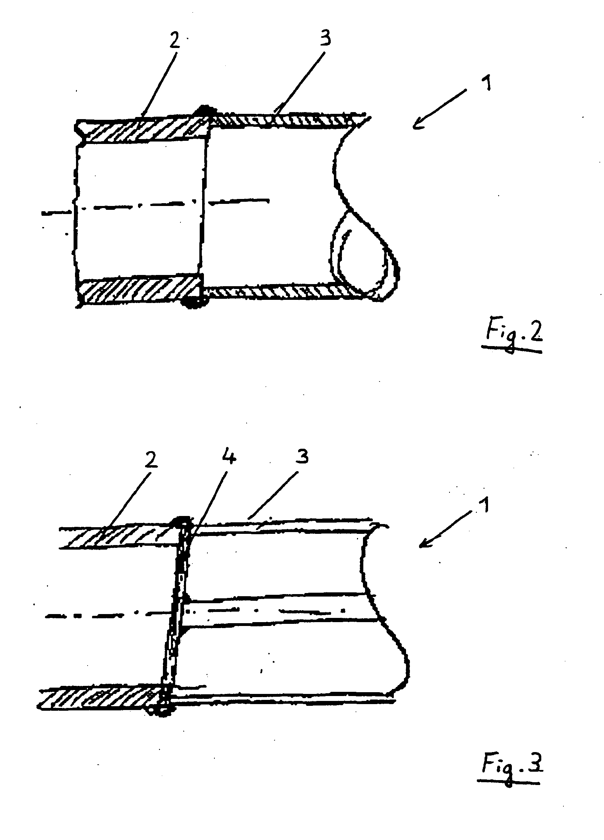

In **Fig.** 1 und **Fig.** 2 ist ein in einem Kraftfahrzeug als Cockpitträger dienender Querträger 1 dargestellt. Der Querträger 1 mit einem rohrförmigen Querschnitt besteht aus einem ersten Abschnitt 2 auf der Fahrerseite aus Stahl und einem zweiten Abschnitt 3 auf der Beifahrerseite aus Aluminium. Die beiden Abschnitte 2 und 3 sind stirnseitig umlaufend durch eine Reibschweißung miteinander verbunden, so dass der Querträger 1 steif ist.

An den Querträger 1 sind mehrere Halteelemente 5 für hier nicht dargestellte Anbauelemente angeschweißt. Als Anbauelement wird an den Halteelementen 5 beispielsweise eine Lenksäule oder ein Beifahrerairbag-Modul befestigt. Am linken und am rechten Ende des Querträgers 1 sind Befestigungselemente 6 angebracht, die eine schnelle und bequeme Montage des Querträgers 1 an der restlichen Fahrzeugkarosserie ermöglichen. Im mittleren Bereich weist der Querträger 1 eine Tunnelabstützung 7 auf, die beispielsweise die durch die Lenksäule in den ersten Abschnitt 2 auf der Fahrerseite eingeleiteten Kräfte mit aufnehmen kann. Aufgrund dieser Tunnelabstützung 7 sind auf der Beifahrerseite die Kräfte, denen der Querträger 1 mit dem zweiten Abschnitt 3 standhalten muss, deutlich geringer als auf der Fahrerseite. Daher kann dieser zweite Abschnitt 3 aus Aluminium stranggepresst sein, während der erste Abschnitt 2 aus Stahl sein muss. Dies führt zu einer Reduzierung der Masse des Querträgers 1 um ca. 1,0 bis 1,5 Kilogramm, ohne dass damit nennenswert höhere Kosten verbunden wären.

Beim in **Fig**. 3 gezeigten Längsschnitt durch einen Querträger 1 sind die beiden Abschnitte 2 und 3 stirnseitig jeweils mit einer Stahlplatte 4 verschweißt. Aufgrund der Stahlplatte 4 können die beiden Abschnitte 2 und 3 völlig unterschiedliche Querschnitte und Außendurchmesser aufweisen. Dadurch ist eine noch weitergehende Anpassung der beiden Abschnitte 2 und 3 an die gegebenen Belastungsfälle möglich.

Alternativ können die beiden Abschnitte 2 und 3 auch ohne Stahlplatte unterschiedliche Außendurchmesser aufweisen, wenn einer der beiden Abschnitte zur Schweißanbindung hin verjüngt ist. Zur Verjüngung des Abschnitts kann dieser beispielsweise rundgeknetet oder die Matrize eingezogen worden sein. An der Schweißstelle entsprechen dann die Außendurchmesser der beiden Abschnitte wieder einander.

## Patentansprüche

1. Querträger zwischen zwei seitlichen Randbereichen einer Fahrzeugstruktur mit wenigstens einem Halteelement zur Anbindung von Fahrzeugfunktionselementen, wobei der Querträger **(1)** axial aus einem ersten Abschnitt **(2)** und einem zweiten Abschnitt **(3)** aus einem Leichtmetall besteht, **dadurch gekennzeichnet, dass** der erste Abschnitt aus Stahl besteht und dass die beiden Abschnitte (**2** und **3**) miteinander stoß an stoß ohne Überlappung reibverschweißt sind.

2. Querträger nach Anspruch 1, **dadurch gekennzeichnet, dass** das Leichtmetall Aluminium oder Magnesium bzw. eine Aluminium- oder Magnesiumlegierung ist.

3. Querträger nach einem der vorhergehenden Ansprüche, **dadurch gekennzeichnet, dass** die beiden Abschnitte **(2** und **3)** einen rohrförmigen Querschnitt aufweisen.

## Claims

1. A cross-member between two lateral edge regions of a vehicle structure, comprising at least one retaining element for attachment of vehicle function elements, wherein the cross-member (1) axially comprises a first portion (2) and a second light-metal portion (3), **characterised in that** the first portion is made of steel and the two portions (2 and 3) are friction-welded together butt to butt without overlapping.

2. A cross-member according to claim 1, **characterised in that** the light metal is aluminium or magnesium or an aluminium or magnesium alloy.

3. A cross-member according to any of the preceding claims, **characterised in that** the two portions (2 and 3) have a tubular cross-section.

## Revendications

1. Traverse structurelle entre deux parties latérales d'un véhicule automobile avec au moins un élément de maintien pour relier des éléments fonctionnels du véhicule, la traverse structurelle (1) se composant axialement d'une première section (2) et d'une deuxième section (3) en métal léger,
**caractérisée en ce que**
la première section est en acier et les deux sections (1 et 2) sont soudées l'une à l'autre par friction, bord à bord, sans chevauchement.

2. Traverse structurelle selon la revendication 1,
**caractérisée en ce que**
le métal léger est de l'aluminium ou du magnésium et/ou un alliage d'aluminium ou de magnésium.

3. Traverse structurelle selon l'une quelconque des revendications précédentes,
**caractérisée en ce que**
les deux sections (2 et 3) présentent une section transversale tubulaire.
